# EUROPEAN PATENT SPECIFICATION

(11) **EP 4 149 028 B1**
(45) Date of publication and mention of the grant of the patent: **28.05.2025**
(21) Application number: 21306240.9
(22) Date of filing: 10.09.2021
(51) Int. Cl.: H04J 3/06, G06F 9/50, H04L 12/40, H04L 49/354, H04L 67/12

(54) **SYNCHRONIZATION FOR BACKPLANE COMMUNICATION**
SYNCHRONISIERUNG FÜR RÜCKWANDKOMMUNIKATION
SYNCHRONISATION DE COMMUNICATION DE FOND DE PANIER

(43) Date of publication of application: 15.03.2023
(73) Proprietor: Schneider Electric Industries SAS, 92500 Rueil-Malmaison (FR)
(72) Inventor: SARR, Assane, 06270 Villeneuve Loubet (FR); SOBOCINSKI, Maxime, 06800 Cagnes Sur Mer (FR); JARAUDIAS, Patrice, 06110 Le Cannet (FR)
(74) Representative: Schneider Electric

(56) References cited:
- EP-A1- 1 717 978
- LEYRER THOMAS ET AL: "Analysis and implementation of multi-protocol gigabit Ethernet switch for real-time control systems", 2021 IEEE INTERNATIONAL CONFERENCE ON COMMUNICATIONS WORKSHOPS (ICC WORKSHOPS), IEEE, 14 June 2021 (2021-06-14), pages 1 - 6, XP033939040, DOI: 10.1109/ICCWORKSHOPS50388.2021.9473718

## Description

### FIELD OF INVENTION

The present disclosure relates generally to industrial networks and, more particularly, to systems that support multiple industrial Ethernet protocols, fieldbus protocols, and industrial application processing, and provide high performance for backplane communication for programmable logic controller in industrial architecture.

### BACKGROUND

Industrial automation/control systems are employed for controlling operation of a wide variety of systems, including processes, machines, etc., and are typically adaptable to different control applications through configuration and interconnection of multiple control system components or devices, such as control modules, Input/Output (I/O) modules, I/O devices, etc. Existing industrial control systems typically include a processor running or executing a control program to interact with an I/O system (e.g., typically one or more I/O modules or devices) to receive system information in the form of analog and/or digital inputs from field sensors and to provide outputs (analog and/or digital) to one or more actuators. Industrial control systems are increasingly being interconnected with management information and other systems in a manufacturing facility, and may be operatively connected to any number of communications networks to facilitate various business management functions such as inventory control, accounting, manufacturing control, etc., in addition to the process/machine control functionality.

A desire to integrate the business and control network structures to interconnect industrial control systems with general purpose systems, along with the evolution and development of fast Ethernet (e.g., in switch mode with full duplex capability), has allowed for Industrial Ethernet networks (e.g., such as Ethernet/IP networks that allow for direct connection of field devices to an Ethernet network) to be widely used in industrial applications. Indeed, industrial Ethernet is becoming the dominant (if not incumbent) technology in industrial automation.

In a slice I/O architecture, a standalone I/O island is connected to a control device like a programmable logic controller PLC with a fieldbus like Ethernet/IP and contains a head driving clusters of I/O modules respectively through cluster managers. A cluster is a set of I/O modules, up to 32 modules, physically linked together through a backplane and an I/O module is a usual automation module converting electrical signals to digital values. In a cluster, the cluster manager and different modules can communicate by means of their respective switches through a multipoint communication line.

For example, a port of a switch may be configured to send a specific frame at a schedule time window, especially if the switches share a same clock and are synchronized. The heads and the cluster managers can be synchronized using a Generalized Precision Time Protocol (gPTP) which employs layer 2 (Ethernet) messages to establish a hierarchy of clocks and synchronize time in a gPTP domain which the heads and the cluster managers belong to. For real-time communication with non-negotiable time boundaries for end-to-end transmission latencies, all switches should have a common time reference as their clocks are synchronizes among each other.

However, the I/O modules cannot transmit before being synchronized and a standard stack in a switch of a I/O module needs to transmit before starting the synchronization algorithm.

There is therefore a need for enabling an efficient synchronization of a cluster manager and I/O modules, the respecting reliability and real time constraints, being resistant to measurement errors.

Document LEYRER THOMAS ET AL "Analysis and implementation of multi-protocol gigabit Ethernet switch for real-time control systems", 2021 IEEE INTERNATIONAL CONFERENCE ON COMMUNICATIONS WORKSHOPS (ICC WORKSHOPS), describes a real-time control system comprising a central control unit distributing I/O data over Ethernet to multiple I/O devices.

Document EP1717978 Aldiscloses the synchronization between an industrial controller and a plurality of I/O modules by using the IEEE 1588 PTP protocol.

### SUMMARY

This summary is provided to introduce concepts related to the present inventive subject matter. This summary is not intended to identify essential features of the claimed subject matter nor is it intended for use in determining or limiting the scope of the claimed subject matter.

In one implementation, there is provided an industrial system for controlling backplane communication, comprising:
a cluster manager comprising a primary switch linked to a primary control module,
at least one Input/Output, I/O, module comprising a secondary switch linked to a secondary control module,
a unidirectional communication line linking the cluster manager to the at least one IO module through passive base plates,
wherein the cluster manager comprises a transmission port and a reception port on the unidirectional communication line and the at least one Input/Output module comprises a reception port on the unidirectional communication line,
wherein the primary control module is configured to generate a pulse via the transmission port on the unidirectional communication line,
wherein, upon reception of the pulse, received simultaneously by the cluster manager and the at least one I/O module, the primary control module is configured to create a primary timestamp from a primary clock of the primary switch and the secondary control module is configured to create a secondary timestamp from a secondary clock of the secondary switch,
wherein the primary control module is configured to send a message via the transmission port on the unidirectional communication line to the secondary control module, the message comprising the primary timestamp,
wherein, upon reception of the message, the secondary control module is configured to synchronize the secondary clock with the primary clock based on the received primary timestamp and secondary timestamp.

Advantageously, the industrial system allows the I/O modules to be synchronized with the cluster manager without involving a switch nor a hub and enables the communication between I/O modules and the cluster manager while respecting real time constraint and low-cost products by the use of passive base plates and the unidirectional communication line. The use of the unidirectional communication line in passive base plates allows a high level of reliability with no active component in the backplane and minimized risk of failure and offers a low-cost solution as no external switch is needed.

Moreover, for the synchronization, the mechanism related to a path delay is eliminated by means of the pulse received at the same time by the cluster manager and the I/O modules via the unidirectional communication line. The path delay is considered null or negligible so its calculation can be removed from a clock servo algorithm for synchronization.

In an embodiment, the primary timestamp and the secondary timestamp are created simultaneously, the path delay between the reception port of the cluster manager and the reception port of the at least one Input/Output module being considered null or negligible.

In an embodiment, the cluster manager is further linked to the at least one IO module via a multipoint communication line allowing the cluster manager to transmit data in frames on the multipoint communication line at scheduled time windows to the at least one IO module when the primary clock and the secondary clock are synchronized.

In an embodiment, the primary switch and the secondary switch are Time Sensitive Networking switches.

In an embodiment, the primary switch and the secondary switch are implemented with the IEEE 802. 1Qbv time-aware scheduler to schedule static time windows and dynamic time windows.

In an embodiment, the primary clock and the secondary clock are synchronized based on Precision Time Protocol.

In an embodiment, the primary clock is able to be synchronized in time based on a Generalized Precision Time Protocol in a time domain which other cluster managers belong to.

In an embodiment, the message further comprises an error-detecting code to determine if the message contains errors.

In another implementation, there is provided a method for controlling backplane communication of an industrial system that comprises:
a cluster manager comprising a primary switch linked to a primary control module,
at least one Input/Output, I/O, module comprising a secondary switch linked to a secondary control module,
a unidirectional communication line linking the cluster manager to the at least one IO module through passive base plates,
wherein the cluster manager comprises a transmission port and a reception port on the unidirectional communication line and the at least one Input/Output module comprises a reception port on the unidirectional communication line,
the method comprising:
   generating, by the primary control module, a pulse via the transmission port on the unidirectional communication line,
   creating, by the primary control module, upon reception of the pulse, received simultaneously by the cluster manager and the at least one I/O module, a primary timestamp from a primary clock of the primary switch and the secondary control module is configured to create a secondary timestamp from a secondary clock of the secondary switch,
   sending, by the primary control module, a message via the transmission port on the unidirectional communication line to the secondary control module, the message comprising the primary timestamp,
   synchronizing, by the secondary control module, upon reception of the message, the secondary clock with the primary clock based on the received primary timestamp and secondary timestamp.

In another implementation there is provided a computer-readable medium having embodied thereon a computer program which when execute by a computer cause the computer to carry out the method according to the invention.

### BRIEF DESCRIPTION OF THE FIGURES

The detailed description is described with reference to the accompanying figures. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:
FIG. 1 shows a schematic block diagram of an industrial communication system using a unidirectional communication line between a cluster manager and I/O modules;
FIG. 2 is a flow diagram of a method for controlling backplane communication of an industrial system according to one embodiment.

The same reference number represents the same element or the same type of element on all drawings.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

### DESCRIPTION OF EMBODIMENTS

The figures and the following description illustrate specific exemplary embodiments of the invention. It will thus be appreciated that those skilled in the art will be able to devise various arrangements that, although not explicitly described or shown herein, embody the principles of the invention and are included within the scope of the invention. Furthermore, any examples described herein are intended to aid in understanding the principles of the invention, and are to be construed as being without limitation to such specifically recited examples and conditions. As a result, the invention is not limited to the specific embodiments or examples described below, but by the claims and their equivalents.

In order to provide needed networking and communication support for Automated Control Systems, IEEE 802.1 time sensitive network (TSN) has emerged as a popular technology. TSN refers to the IEEE 802.1Q defined standard technology to provide deterministic messaging on standard Ethernet. TSN is a Layer 2 technology and is centrally managed and delivers guarantees of delivery and minimized jitter using time scheduling for those real-time applications that require determinism.

The IEEE 802.1Q standards work at OSI Layer 2. TSN is an Ethernet standard, rather than an Internet Protocol (IP) standard. The forwarding decisions made by the TSN bridges use the Ethernet header contents, not the IP address. The payloads of the Ethernet frames can be anything and are not limited to IP. This means that TSN can be used in any environment and can carry the payload of any industrial application.

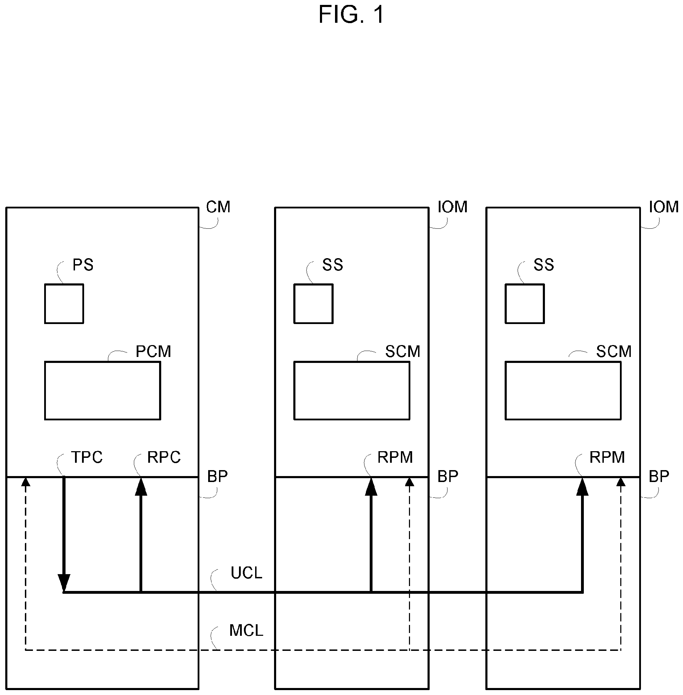

Referring to FIG. 1, an industrial communication system comprises a cluster manager CM, a set of I/O modules IOM, base plates BP and a unidirectional communication line UCL. Furthermore, the industrial communication system comprises a multipoint communication line MCL linking the cluster manager CM and the set of I/O modules IOM.

The cluster manager CM is able to manage communication with a set of I/O modules IOM, up to 32, via the multipoint communication line like a multipoint low voltage differential signaling (MLVDS) bus, and optionally with another cluster manager via Ethernet and CAN (Controller Area Network) bus. The cluster manager CM is driven by a head that can drive other cluster managers. In one embodiment, the cluster manager is included in the head connected via a fieldbus to a control device like a PLC. In one embodiment, the head is also included in the PLC.

An I/O module IOM can include Analog to Digital Converter (ADC) and Digital to Analog Converter (DAC) for connecting to sensors and the real world, communications modules, digital inputs and outputs, relays, and more. An I/O module communicates with the control manager CM through the communication bus with adapted packet formats.

The base plates BP are respectively associated with the I/O modules that are plugged into them. The base plates BP may be designed to form a backplane for the set of I/O modules, each combination of base plate and associated I/O module forming a slice of the backplane.

Each base plate is a passive base plate that offers no active bus driving circuitry, any desired arbitration logic being placed on the I/O module. A passive base plate is thus expected to not have a single point of failure (SPOF).

The unidirectional communication line UCL is a physical medium configured to be coupled to multiple I/O modules and the cluster manager and provides a multi-drop capability from the cluster manager. More precisely, the cluster manager comprises a transmission port TPC and a reception port RPC on the unidirectional communication line and each Input/Output module comprises a reception port RPM on the unidirectional communication line. The unidirectional communication line is a signaling line allowing the cluster manager to send data that are received simultaneously by the cluster manager itself and the I/O modules, assuming the propagation time in the unidirectional communication line is negligible.

The cluster manager CM comprises a primary switch PS and a primary control module PCM. The primary control module PCM controls the transmission port and the reception port on the unidirectional communication line, in order to transmit and receive data on this latter.

An Input/Output module IOM comprises a secondary switch SS and a secondary control module SCM. The secondary control module SCM controls the reception port on the unidirectional communication line, in order to receive data on this latter.

The primary switch PS and the secondary switch SS are defined as TSN switches which allow a communication between the cluster manager and an I/O module without any collision in the data traffic. As mentioned before, TSN is a technology that is focused on time, and was developed to provide a way to make sure information can travel from point A to point B in a fixed and predictable amount of time. The primary switch PS and the secondary switch SS implement respectively a primary clock and a secondary clock.

The primary switch PS is a time-aware relay and implements for example the standard 802.1AS-Rev, and can be synchronized in time in a gPTP domain which heads and other cluster managers belong to.

The primary switch PS is able to run a gPTP stack in slave mode in the gPTP domain and is able to run a PTP stack, called sPTP, in master mode in a time domain, called sPTP domain, which the cluster manager and the I/O modules belong to. Thus a sPTP domain can be created for each cluster of I/O modules.

The primary switch PS is configured to use the unidirectional communication line UCL to send a pulse that triggers a timestamp in any elements (I/O modules) of the backplane in order to synchronize the primary clock with the secondary clocks of the I/O modules. The unidirectional communication line is used to transport the time of the primary clock to all I/O modules.

To that end, the secondary switch SS is able to run a sPTP stack in slave mode in order to be synchronized with the primary switch PS running a sPTP stack in master mode that can be updated in the gPTP domain.

In this architecture, all the elements of a whole industrial system can be updated and synchronized in time: in the gPTP domain encompassing a northbound network and synchronizing all the cluster managers with heads, and in the sPTP domain encompassing a southbound network in each cluster of I/O modules and synchronizing all the I/O modules managers with their respective cluster manager.

More specifically, the primary control module PCM is able to generate a periodic pulse via the transmission port on the unidirectional communication line. The pulse is then received on the reception port RPC of the cluster manager and the reception port RPM of each I/O module.

Upon reception of the pulse, the primary control module PCM is able to create a primary timestamp from the primary clock of the primary switch and each secondary control module SCM is configured to create a secondary timestamp from the secondary clock of the corresponding secondary switch.

The primary control module PCM transmits a message via the transmission port on the unidirectional communication line, the message being received by all I/O modules linked to the unidirectional communication line and comprising the primary timestamp. The message can further comprise an error-detecting code like a cyclic redundancy check (CRC) to determine if the message containing the primary timestamp contains errors or has been corrupted.

Upon reception of the message, each I/O module is able to synchronize the secondary clock with the primary clock based on the received primary timestamp and the previously created secondary timestamp.

As the primary timestamp was generated at the same time as the secondary timestamp, upon reception of the pulse, this mechanism allows the synchronization of the secondary clock with the primary clock and removes the delay from the line: delay measurement and compensation are not needed anymore in comparison with a classic PTP event message sequences that occur during synchronization.

Once the all the clocks are synchronized, in the sPTP domain and thus in the gPTP domain, all switches have a common time reference for real-time communication with non-negotiable time boundaries for end-to-end transmission latencies. The cluster manager CM is thus synchronized in time with the set of I/O modules and is able to communicate with the set of I/O modules via the multipoint communication line MCL.

The cluster manager CM further contains a packet processor that manages the data frames, like Ethernet frames, coming from the I/O modules through the primary switch PS via the multipoint communication line MCL. For example, the packet processor is able to extract the payload of each Ethernet frame, verify the signature of each payload, concatenate all payloads in one payload in only one concatenated Ethernet frame, calculate a new signature and send the concatenated Ethernet frame to a processing unit.

The primary switch and the secondary switch define which ports are configured to send or received data. For example, a port of the switch may be configured to send a specific frame at a schedule time window. Especially, a switch manages different traffic queues according to the concept of Time-Aware Shaping (TAS) introduced by IEEE 802.1Qbv standard. Time-Aware Shaping enables determinism by dividing traffic in different preconfigured time-slots configured in a Gate-Control-Lists (GCL). The time aware shaper consists different traffic queues. Each queue is associated with a gate and has a transmission selection algorithm which selects the next packet transmitted from the queue. The queue can be organized in first in first out (FIFO). The state of a gate can either be open or close, and only open gates can transmit packets. A time aware gate opens and closes according to its configured time. The schedule of the gate states is specified in the GCL. Each entry of the list consists of a set of gate states and their duration.

At each time cycle, the switch commands the opening of a gate for a scheduled time window for transmitting the data in the queue associated with said gate, the other gates remaining closed. At each time cycle, a switch may send data in a static time window, control data in another static time window, and potentially service data in a dynamic time window that is scheduled by the cluster manager.

Thanks to the synchronized clocks of the switches of the I/O modules, all the I/O modules can share the multipoint communication line MCL to transmit I/O data at respective scheduled static time windows with deterministic latency at each time cycle. Thanks to the IEEE 802.1Qbv time-aware scheduler, at least one I/O module can transmit service data on the communication bus at a scheduled dynamic time windows in a best effort way.

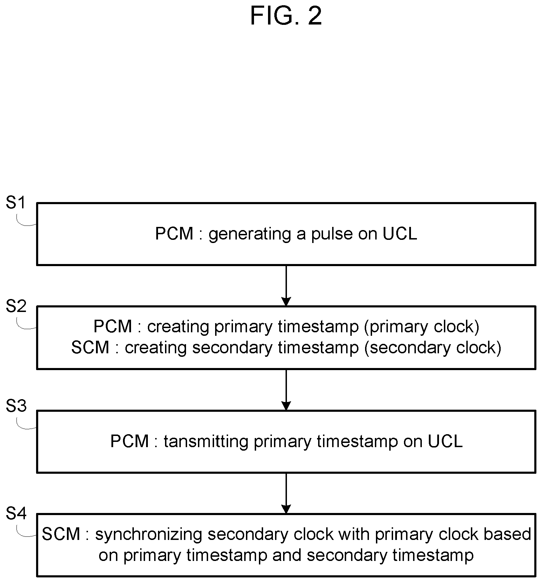

With reference to FIG. 2, a method for controlling backplane communication according to one embodiment of the invention comprises steps S1 to S4.

In step S1, the primary control module PCM generates a pulse via the transmission port TPC on the unidirectional communication line UCL. The pulse is received by each I/O module on its reception port RPM and by the cluster manager itself on the reception port RPC.

In step S2, upon reception of the pulse, the primary control module PCM creates a primary timestamp from the primary clock of the primary switch PS. To that end, the primary control module PCM interrogates and captures the master PTP time base corresponding to the primary clock of the primary switch PS. The value of the master PTP time base captured by the primary control module PCM is sampled to create the primary timestamp.

At the same time upon reception of the pulse at each I/O module, because the path delay is considered null or negligible, the secondary control module SCM creates a secondary timestamp from the secondary clock of the corresponding secondary switch SS. Similarly, the secondary control module SCM interrogates and captures the master PTP time base corresponding to the secondary clock of the secondary switch SS.

In step S3, the primary control module PCM transmits a message via the transmission port on the unidirectional communication line, the message comprising the primary timestamp and an error-detecting code. The message is received by each I/O module on its reception port RPM and by the cluster manager itself on the reception port RPC.

In step S4, after reception of the message, the secondary control module SCM of each I/O module is able to synchronize the secondary clock with the primary clock based on the received primary timestamp and the previously created secondary timestamp.

In one embodiment, the cluster manager implements two components operating the primary switch PS. A first component operates as described before, with the gPTP stack in slave mode and the sPTP stack in master mode. A second component runs only a sPTP stack in slave mode in a similar way as a secondary switch of a I/O module.

Besides the I/O modules, after reception of the message, the cluster manager is able to synchronize an auxiliary clock with the primary clock based on the received primary timestamp and a previously created secondary timestamp by the auxiliary clock in step S2 upon reception of the pulse.

Although the present invention has been described above with reference to specific embodiments, it is not intended to be limited to the specific form set forth herein. Rather, the invention is limited only by the accompanying claims and, other embodiments than the specific above are equally possible within the scope of these appended claims.

Furthermore, although exemplary embodiments have been described above in some exemplary combination of components and/or functions, it should be appreciated that, alternative embodiments may be provided by different combinations of members and/or functions without departing from the scope of the present disclosure. In addition, it is specifically contemplated that a particular feature described, either individually or as part of an embodiment, can be combined with other individually described features, or parts of other embodiments

## Claims

1. An industrial system for controlling backplane communication, comprising:
a cluster manager (CM) comprising a primary switch (PS) linked to a primary control module (PCM),
at least one Input/Output, I/O, module (IOM) comprising a secondary switch (SS) linked to a secondary control module (SCM),
a unidirectional communication line (UCL) linking the cluster manager (CM) to the at least one I/O module (IOM) through passive base plates (BP),
wherein the cluster manager (CM) comprises a transmission port (TPC) and a reception port (RPC) on the unidirectional communication line and the at least one Input/Output module (IOM) comprises a reception port (RPM) on the unidirectional communication line,
wherein the primary control module is configured to generate a pulse via the transmission port (TPC) on the unidirectional communication line,
wherein, upon reception of the pulse, received simultaneously by the cluster manager and the at least one I/O module, the primary control module (PCM) is configured to create a primary timestamp from a primary clock of the primary switch and the secondary control module (SCM) is configured to create a secondary timestamp from a secondary clock of the secondary switch,
wherein the primary control module (PCM) is configured to send a message via the transmission port (TPC) on the unidirectional communication line to the secondary control module, the message comprising the primary timestamp,
wherein, upon reception of the message, the secondary control module (SCM) is configured to synchronize the secondary clock with the primary clock based on the received primary timestamp and secondary timestamp.

2. An industrial system according to claim 1, wherein the primary timestamp and the secondary timestamp are created simultaneously, the path delay between the reception port (RPC) of the cluster manager (CM) and the reception port (RPM) of the at least one Input/Output module (IOM) being considered null or negligible.

3. An industrial system according to any of previous claims, wherein the cluster manager (CM) is further linked to the at least one IO module (IOM) via a multipoint communication line (MCL) allowing the cluster manager to transmit data in frames on the multipoint communication line (MCL) at scheduled time windows to the at least one IO module (IOM) when the primary clock and the secondary clock are synchronized.

4. An industrial system according to any of previous claims, wherein the primary switch and the secondary switch are Time Sensitive Networking switches.

5. An industrial system according to any of previous claims, wherein the primary switch and the secondary switch are implemented with the IEEE 802.1Qbv time-aware scheduler to schedule static time windows and dynamic time windows.

6. An industrial system according to any of previous claims, wherein the primary clock and the secondary clock are synchronized based on Precision Time Protocol.

7. An industrial system according to any of previous claims, wherein the primary clock is able to be synchronized in time based on a Generalized Precision Time Protocol in a time domain which other cluster managers belong to.

8. An industrial system according to any of previous claims, wherein the message further comprises an error-detecting code to determine if the message contains errors.

9. A method for controlling backplane communication of an industrial system that comprises:
a cluster manager (CM) comprising a primary switch (PS) linked to a primary control module (PCM),
at least one Input/Output, I/O, module (IOM) comprising a secondary switch (SS) linked to a secondary control module (SCM),
a unidirectional communication line (UCL) linking the cluster manager (CM) to the at least one IO module (IOM) through passive base plates (BP),
wherein the cluster manager (CM) comprises a transmission port (TPC) and a reception port (RPC) on the unidirectional communication line and the at least one Input/Output module (IOM) comprises a reception port (RPM) on the unidirectional communication line,
the method comprising:
generating, by the primary control module (PCM), a pulse via the transmission port (TPC) on the unidirectional communication line,
creating, by the primary control module (PCM), upon reception of the pulse, received simultaneously by the cluster manager and the at least one I/O module, a primary timestamp from a primary clock of the primary switch and the secondary control module (SCM) is configured to create a secondary timestamp from a secondary clock of the secondary switch,
sending, by the primary control module (PCM), a message via the transmission port on the unidirectional communication line to the secondary control module, the message comprising the primary timestamp,
synchronizing, by the secondary control module (SCM), upon reception of the message, the secondary clock with the primary clock based on the received primary timestamp and secondary timestamp.

10. A computer-readable medium comprising instructions which, when executed by a computer, cause the computer to carry out the method for controlling backplane communication of an industrial system according to claim 9.

## Patentansprüche

1. Industrielles System zum Steuern einer Backplanekommunikation, umfassend:
einen Clustermanager (CM), der einen primären Schalter (PS) umfasst, der mit einem primären Steuermodul (PCM) verbunden ist,
mindestens ein Eingabe/Ausgabe-Modul, E/A-Modul, (IOM), das einen sekundären Schalter (SS) umfasst, der mit einem sekundären Steuermodul (SCM) verbunden ist,
eine unidirektionale Kommunikationsleitung (UCL), die den Clustermanager (CM) über passive Basisplatten (BP) mit dem mindestens einen EA-Modul (IOM) verbindet,
wobei der Clustermanager (CM) einen Sendeport (TPC) und einen Empfangsport (RPC) auf der unidirektionalen Kommunikationsleitung umfasst und das mindestens eine Eingabe/Ausgabe-Modul (IOM) einen Empfangsport (RPM) auf der unidirektionalen Kommunikationsleitung umfasst,
wobei das primäre Steuermodul dazu ausgelegt ist, einen Impuls über den Sendeport (TPC) auf der unidirektionalen Kommunikationsleitung zu erzeugen,
wobei bei Empfang des Impulses, der gleichzeitig durch den Clustermanager und das mindestens eine E/A-Modul empfangen wird, das primäre Steuermodul (PCM) dazu ausgelegt ist, einen primären Zeitstempel aus einem primären Takt des primären Schalters zu erzeugen, und das sekundäre Steuermodul (SCM) dazu ausgelegt ist, einen sekundären Zeitstempel aus einem sekundären Takt des sekundären Schalters zu erzeugen,
wobei das primäre Steuermodul (PCM) dazu ausgelegt ist, eine Nachricht über den Sendeport (TPC) auf der unidirektionalen Kommunikationsleitung an das sekundäre Steuermodul zu senden, wobei die Nachricht den primären Zeitstempel umfasst,
wobei bei Empfang der Nachricht das sekundäre Steuermodul (SCM) dazu ausgelegt ist, den sekundären Takt mit dem primären Takt basierend auf dem empfangenen primären Zeitstempel und sekundären Zeitstempel zu synchronisieren.

2. Industrielles System nach Anspruch 1, wobei der primäre Zeitstempel und der sekundäre Zeitstempel gleichzeitig erzeugt werden, wobei die Pfadverzögerung zwischen dem Empfangsport (RPC) des Clustermanagers (CM) und dem Empfangsport (RPM) des mindestens einen Eingabe-/Ausgabemoduls (IOM) als null oder vernachlässigbar angesehen wird.

3. Industrielles System nach einem der vorhergehenden Ansprüche, wobei der Clustermanager (CM) ferner über eine Mehrpunkt-Kommunikationsleitung (MCL), die dem Clustermanager ermöglicht, Daten in Rahmen auf der Mehrpunkt-Kommunikationsleitung (MCL) zu geplanten Zeitfenstern an das mindestens eine EA-Modul (IOM) zu übertragen, wenn der primäre Takt und der sekundäre Takt synchronisiert sind, mit dem mindestens einen EA-Modul (IOM) verbunden ist.

4. Industrielles System nach einem der vorhergehenden Ansprüche, wobei der primäre Schalter und der sekundäre Schalter zeitempfindliche Netzwerkschalter sind.

5. Industrielles System nach einem der vorhergehenden Ansprüche, wobei der primäre Schalter und der sekundäre Schalter mit dem Time-Aware Scheduler nach IEEE 802.1Qbv implementiert sind, um statische Zeitfenster und dynamische Zeitfenster zu planen.

6. Industrielles System nach einem der vorhergehenden Ansprüche, wobei der primäre Takt und der sekundäre Takt basierend auf dem Präzisionszeitprotokoll synchronisiert sind.

7. Industrielles System nach einem der vorhergehenden Ansprüche, wobei der primäre Takt basierend auf einem Generalized Precision Time Protocol in einer Zeitdomäne, zu der andere Clustermanager gehören, zeitlich synchronisiert werden kann.

8. Industrielles System nach einem der vorhergehenden Ansprüche, wobei die Nachricht ferner einen Fehlerdetektionscode umfasst, um zu bestimmen, ob die Nachricht Fehler enthält.

9. Verfahren zum Steuern einer Backplanekommunikation eines industriellen Systems, das Folgendes umfasst:
einen Clustermanager (CM), der einen primären Schalter (PS) umfasst, der mit einem primären Steuermodul (PCM) verbunden ist,
mindestens ein Eingabe/Ausgabe-Modul, E/A-Modul, (IOM), das einen sekundären Schalter (SS) umfasst, der mit einem sekundären Steuermodul (SCM) verbunden ist,
eine unidirektionale Kommunikationsleitung (UCL), die den Clustermanager (CM) über passive Basisplatten (BP) mit dem mindestens einen EA-Modul (IOM) verbindet,
wobei der Clustermanager (CM) einen Sendeport (TPC) und einen Empfangsport (RPC) auf der unidirektionalen Kommunikationsleitung umfasst und das mindestens eine Eingabe/Ausgabe-Modul (IOM) einen Empfangsport (RPM) auf der unidirektionalen Kommunikationsleitung umfasst,
wobei das Verfahren Folgendes umfasst:
Erzeugen, durch das primäre Steuermodul (PCM), eines Impulses über den Sendeport (TPC) auf der unidirektionalen Kommunikationsleitung,
Erzeugen, durch das primäre Steuermodul (PCM), bei Empfang des Impulses, der gleichzeitig durch den Clustermanager und das mindestens eine E/A-Modul empfangen wird, eines primären Zeitstempels aus einem primären Takt des primären Schalters, und das sekundäre Steuermodul (SCM) dazu ausgelegt ist, einen sekundären Zeitstempel aus einem sekundären Takt des sekundären Schalters zu erzeugen,
Senden, durch das primäre Steuermodul (PCM), einer Nachricht über den Sendeport auf der unidirektionalen Kommunikationsleitung (UCL) an das sekundäre Steuermodul, wobei die Nachricht den primären Zeitstempel umfasst,
Synchronisieren, durch das sekundäre Steuermodul (SCM), nach Empfang der Nachricht, des sekundären Takts mit dem primären Takt basierend auf dem empfangenen primären Zeitstempel und sekundären Zeitstempel.

10. Computerlesbares Medium, das Anweisungen umfasst, die, wenn sie durch einen Computer ausgeführt werden, bewirken, dass der Computer das Verfahren zum Steuern der Backplanekommunikation eines industriellen Systems nach Anspruch 9 ausführt.

## Revendications

1. Système industriel pour commander une communication de fond de panier, comprenant:
un gestionnaire de grappe (« Cluster Manager », CM) comprenant un commutateur primaire (« Primary Switch », PS) lié à un module de commande primaire (« Primary Control Module », PCM),
au moins un module d'entrée/sortie, « Input/Output » I/O, (IOM) comprenant un commutateur secondaire (SS) lié à un module de commande secondaire (« Secondary Control Module », SCM),
une ligne de communication unidirectionnelle (« Unidirectional Communication Line », UCL) liant le gestionnaire de grappe (CM) à l'au moins un module I/O (IOM) par l'intermédiaire de plaques de base (« Base Plates », BP) passives,
dans lequel le gestionnaire de grappe (CM) comprend un port d'émission (« Transmission Port », TPC) et un port de réception (« Reception port », RPC) sur la ligne de communication unidirectionnelle et l'au moins un module d'entrée/sortie (IOM) comprend un port de réception (RPM) sur la ligne de communication unidirectionnelle,
dans lequel le module de commande primaire est configuré pour générer une impulsion par l'intermédiaire du port d'émission (TPC) sur la ligne de communication unidirectionnelle,
dans lequel, dès la réception de l'impulsion, reçue simultanément par le gestionnaire de grappe et l'au moins un module I/O, le module de commande primaire (PCM) est configuré pour créer une estampille temporelle primaire à partir d'une horloge primaire du commutateur primaire et le module de commande secondaire (SCM) est configuré pour créer une estampille temporelle secondaire à partir d'une horloge secondaire du commutateur secondaire,
dans lequel le module de commande primaire (PCM) est configuré pour envoyer un message, par l'intermédiaire du port d'émission (TPC), sur la ligne de communication unidirectionnelle, au module de commande secondaire, le message comprenant l'estampille temporelle primaire,
dans lequel, dès la réception du message, le module de commande secondaire (SCM) est configuré pour synchroniser l'horloge secondaire avec l'horloge primaire sur la base de l'estampille temporelle primaire et de l'estampille temporelle secondaire reçues.

2. Système industriel selon la revendication 1, dans lequel l'estampille temporelle primaire et l'estampille temporelle secondaire sont créées simultanément, le délai de trajet entre le port de réception (RPC) du gestionnaire de grappe (CM) et le port de réception (RPM) de l'au moins un module d'entrée/sortie (IOM) étant considéré nul ou négligeable.

3. Système industriel selon l'une quelconque des revendications précédentes, dans lequel le gestionnaire de grappe (CM) est en outre lié à l'au moins un module I/O (IOM) par l'intermédiaire d'une ligne de communication multipoint (« Multipoint Communication Line », MCL) permettant au gestionnaire de grappe de transmettre des données dans des trames sur la ligne de communication multipoint (MCL), à des fenêtres temporelles ordonnancées, à l'au moins un module I/O (IOM) lorsque l'horloge primaire et l'horloge secondaire sont synchronisées.

4. Système industriel selon l'une quelconque des revendications précédentes, dans lequel le commutateur primaire et le commutateur secondaire sont des commutateurs de réseau sensibles au temps.

5. Système industriel selon l'une quelconque des revendications précédentes, dans lequel le commutateur primaire et le commutateur secondaire sont implémentés avec l'ordonnanceur sensible au temps IEEE 802.1Qbv pour ordonnancer des fenêtres temporelles statiques et des fenêtres temporelles dynamiques.

6. Système industriel selon l'une quelconque des revendications précédentes, dans lequel l'horloge primaire et l'horloge secondaire sont synchronisées sur la base du Protocole temporel de précision.

7. Système industriel selon l'une quelconque des revendications précédentes, dans lequel l'horloge primaire peut être synchronisée en temps sur la base d'un Protocole temporel de précision généralisé dans un domaine temporel auquel appartiennent d'autres gestionnaires de grappe.

8. Système industriel selon l'une quelconque des revendications précédentes, dans lequel le message comprend en outre un code de détection d'erreur pour déterminer si le message contient des erreurs.

9. Procédé pour commander une communication de fond de panier d'un système industriel qui comprend :
un gestionnaire de grappe (« Cluster Manager », CM) comprenant un commutateur primaire (« Primary Switch », PS) lié à un module de commande primaire (« Primary Control Module », PCM),
au moins un module d'entrée/sortie, « Input/Output » I/O, (IOM) comprenant un commutateur secondaire (SS) lié à un module de commande secondaire (« Secondary Control Module », SCM),
une ligne de communication unidirectionnelle (« Unidirectional Communication Line », UCL) liant le gestionnaire de grappe (CM) à l'au moins un module I/O (IOM) par l'intermédiaire de plaques de base (« Base Plates », BP) passives,
dans lequel le gestionnaire de grappe (CM) comprend un port d'émission (« Transmission Port », TPC) et un port de réception (« Reception port », RPC) sur la ligne de communication unidirectionnelle et l'au moins un module d'entrée/sortie (IOM) comprend un port de réception (RPM) sur la ligne de communication unidirectionnelle,
le procédé comprenant :
la génération, par le module de commande primaire (PCM), d'une impulsion par l'intermédiaire du port d'émission (TPC) sur la ligne de communication unidirectionnelle,
la création, par le module de commande primaire (PCM), dès la réception de l'impulsion, reçue simultanément par le gestionnaire de grappe et l'au moins un module I/O, d'une estampille temporelle primaire à partir d'une horloge primaire du commutateur primaire, et le module de commande secondaire (SCM) est configuré pour créer une estampille temporelle secondaire à partir d'une horloge secondaire du commutateur secondaire,
l'envoi, par le module de commande primaire (PCM), d'un message par l'intermédiaire du port d'émission, sur la ligne de communication unidirectionnelle, au module de commande secondaire, le message comprenant l'estampille temporelle primaire,
la synchronisation, par le module de commande secondaire (SCM), dès la réception du message, de l'horloge secondaire avec l'horloge primaire sur la base de l'estampille temporelle primaire et de l'estampille temporelle secondaire reçues.

10. Support lisible par ordinateur comprenant des instructions qui, lorsqu'elles sont exécutées par un ordinateur, amènent l'ordinateur à exécuter le procédé de commande d'une communication de fond de panier d'un système industriel selon la revendication 9.
